# FASCICULE DE BREVET EUROPEEN

(11) **EP 0 920 902 B1**
(45) Date de publication et mention de la délivrance du brevet: **24.03.2004**
(21) Numéro de dépôt: 98402734.2
(22) Date de dépôt: 02.11.1998
(51) Int. Cl.: B01D 53/14

(54) **Dispositif et methode de traitement d'un fluide par compression diphasique et fractionnement**
Vorrichtung und Methode zur Behandlung eines Fluids durch zweiphasige Kompression und Fraktionierung
Device and method for treating a fluid by diphasic compression and fractionation

(30) Priorité: 19.11.1997 FR 9714602
(43) Date de publication de la demande: 09.06.1999
(73) Titulaire: Institut Français du Pétrole, 92852 Rueil-Malmaison Cedex (FR)
(72) Inventeur: Charron, Yves, 91310 Longpont sur Orge (FR); Rojey, Alexandre, 92500 Rueil-Malmaison (FR)

(56) Documents cités:
- FR-A- 2 424 472
- FR-A- 2 534 644
- FR-A- 2 724 200
- US-A- 4 948 394

## Description

La présente invention concerne un dispositif et une méthode permettant de traiter un fluide comprenant au moins une fraction A à séparer, en utilisant un dispositif de compression diphasique et une phase solvant sélective vis à vis de la fraction à séparer.

L'invention s'applique notamment au cas où le fluide est un gaz naturel comportant des gaz acides à éliminer tels que l'hydrogène sulfuré H₂S et/ou le dioxyde de carbone CO₂, ces derniers représentant la fraction A.

Il est connu de traiter des gaz en les mettant en contact avec une phase solvant dans des colonnes d'absorption.

Par exemple, les demandes de brevet FR-2.605.241 et FR-2.616.087, décrivent des procédés de traitement de gaz comprenant des gaz acides et des hydrocarbures en utilisant des solvants physiques. Ces procédés permettent de déshydrater ces gaz, de séparer les hydrocarbures lourds des légers et d'éliminer les gaz acides des hydrocarbures.

Les méthodes décrites dans l'art antérieur présentent néanmoins des inconvénients dont certains sont donnés ci-après:
- au cours du traitement une partie des hydrocarbures peut être coabsorbée dans le solvant,
- les solvants sont en général des produits onéreux et utilisés en grande quantité,
- les unités de traitement requièrent de nombreux équipements périphériques qui réduisent la fiabilité du système,
- les colonnes de mise en contact ont des tailles importantes,
- elles n'élèvent pas le niveau de pression des fluides traités, en vue par exemple de faciliter leur transport ou d'augmenter le pouvoir d'absorption du solvant.

L'idée de la présente invention consiste à utiliser un dispositif de compression permettant le mélange et la dissolution de la ou des fractions de type A dans une phase solvant tout en augmentant le niveau de pression des fluides comprimés.

Dans la suite de la description on désigne sous le terme solvant ou l'expression « phase solvant », un même produit, qui est capable de capter des constituants à séparer d'un fluide, et qui peut être un solvant physique ou chimique.

De la même façon, le terme « fluide désigne des liquides, des gaz ou encore un mélange de liquide et de gaz.

La présente invention concerne un dispositif de traitement d'un fluide F comportant au moins une fraction A à séparer, la fraction à séparer étant au moins soluble dans une phase solvant. Le dispositif est caractérisé en ce qu'il comporte :
⇒ au moins un conduit d'introduction du fluide F à traiter,
⇒ au moins un conduit d'arrivée de ladite phase solvant,
⇒ au moins un dispositif de compression diphasique adapté à homogénéiser les différentes phases du fluide et la phase solvant et pour réaliser la dissolution de la majorité de ladite fraction A dans ladite phase solvant et produire un mélange constitué d'une solution F1 constituée de la phase solvant et de la fraction A dissoute dans ladite phase solvant, et d'un fluide F2 appauvri au moins de la majorité de la fraction A,
⇒ au moins un conduit d'évacuation dudit mélange,
⇒ un dispositif de séparation pourvu de conduits d'évacuation respectivement de la solution F1 constituée de la phase solvant et de la fraction A dissoute et du fluide F2.

Le ou les conduits d'introduction peuvent être pourvus de moyens de compression et/ou de pompage et le conduit d'évacuation d'un dispositif de refroidissement.

Le dispositif peut comporter des moyens disposés en amont dudit dispositif de compression diphasique, lesdits moyens ayant pour fonction de « mélanger » le fluide à traiter et la phase solvant avant de l'introduire par un conduit.

Le dispositif de compression comporte par exemple au moins deux sections, une première section permettant d'obtenir un mélange Mi ayant un niveau de pression Pi et une seconde section permettant d'obtenir à partir du mélange Mi un mélange Ms ayant un niveau de pression Ps, un conduit d'évacuation du mélange Mi et un conduit d'introduction d'un fluide Mi dans la seconde partie, lesdites deux sections étant séparées par un dispositif d'étanchéité et les impulseurs et redresseurs des deux sections étant montées « dos à dos » de manière à minimiser les efforts de poussée axiale.

Le dispositif selon l'invention peut comporter une unité de traitement et/ou de mélange des fluides, l'unité de traitement et/ou de mélange étant reliée au dispositif de compression par des conduits d'arrivée et d'évacuation des fluides.

Un dispositif d'échange de chaleur fait par exemple partie de l'unité de traitement.

Lorsqu'il existe un moyen de réfrigération, ce dernier comporte, par exemple, un circuit d'échange de chaleur, de séparation et de recyclage d'au moins une partie du mélange diphasique prélevé à partir du dispositif de compression diphasique.

Le dispositif peut comporter des moyens de détermination de paramètres liés au fluide et/ou au fonctionnement du dispositif de compression, des moyens de calcul et de traitement de données capables de modifier la vitesse de rotation du dispositif de compression diphasique et/ou d'agir sur l'efficacité du moyen de réfrigération et/ou sur le débit du fluide recyclé dans le circuit de refroidissement.

La présente invention concerne également une méthode pour séparer au moins une fraction ou un constituant A d'un fluide F en utilisant une phase solvant sélective vis à vis des fractions à séparer. Elle est caractérisée en ce que l'on envoie le fluide F et la phase solvant S dans un dispositif de compression diphasique dans des conditions permettant de réaliser la dissolution des fractions A à séparer dans la phase solvant S et obtenir un mélange de fluides formé d'une solution M1 composée des fractions à séparer dissoutes dans le solvant et d'un fluide F2 débarrassé au moins de la majorité de la fraction A.

Selon un mode de mise en oeuvre de la méthode, on peut séparer la solution F1 de phase solvant et de fraction A dissoute, du reste du fluide F2 débarrassé au moins de la majorité de la fraction A, et on peut recycler le fluide F2 au moins en partie en amont du dispositif de compression diphasique.

La méthode peut comporter au moins une étape de prélèvement d'au moins une partie du mélange des fluides après compression à travers un nombre d'étages m du dispositif de compression diphasique, une étape de traitement de la partie prélevée et une étape de renvoi après traitement vers un étage du dispositif de compression de rang supérieur au rang de l'étage m de prélèvement.

On traite par exemple le fluide et/ou un fluide tel qu'une partie du mélange diphasique prélevé et/ou une partie de la phase liquide extraite du mélange diphasique prélevé ou au moins une partie du liquide issu du dispositif de compression diphasique et on recycle le fluide traité vers le fluide extrait du dispositif de compression diphasique.

On peut contrôler le débit de la quantité de la phase solvant en fonction de ladite fraction A à séparer.

On peut régénérer la phase solvant et on la recycle à l'entrée du dispositif de compression diphasique.

On utilise par exemple comme phase solvant liquide une phase aqueuse.

Selon un autre mode de mise en oeuvre, on peut réguler par exemple la vitesse de rotation du dispositif de compression et/ou on contrôle l'efficacité de l'étape de réfrigération et/ou on contrôle le débit de fluide réfrigéré recyclé.

Le dispositif et la méthode pourront avantageusement être utilisés pour le traitement de fluide comportant une phase solvant physique, des gaz acides et une fraction minoritaire d'hydrocarbures dans le but de récupérer la fraction minoritaire d'hydrocarbures.

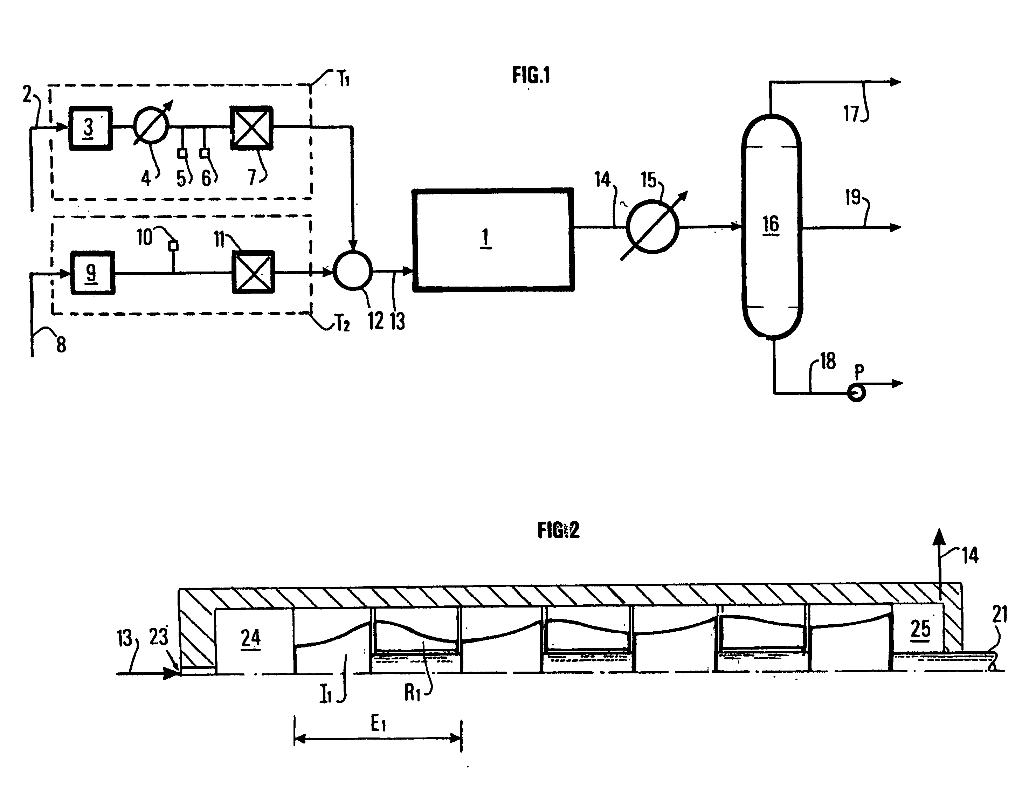

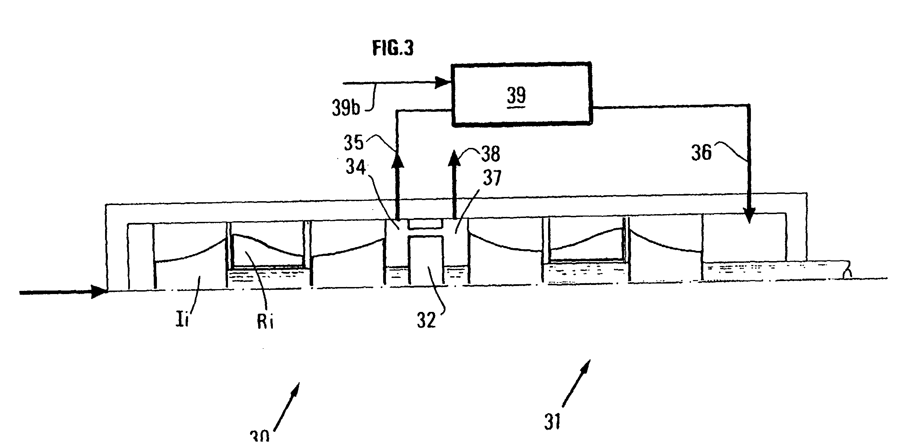

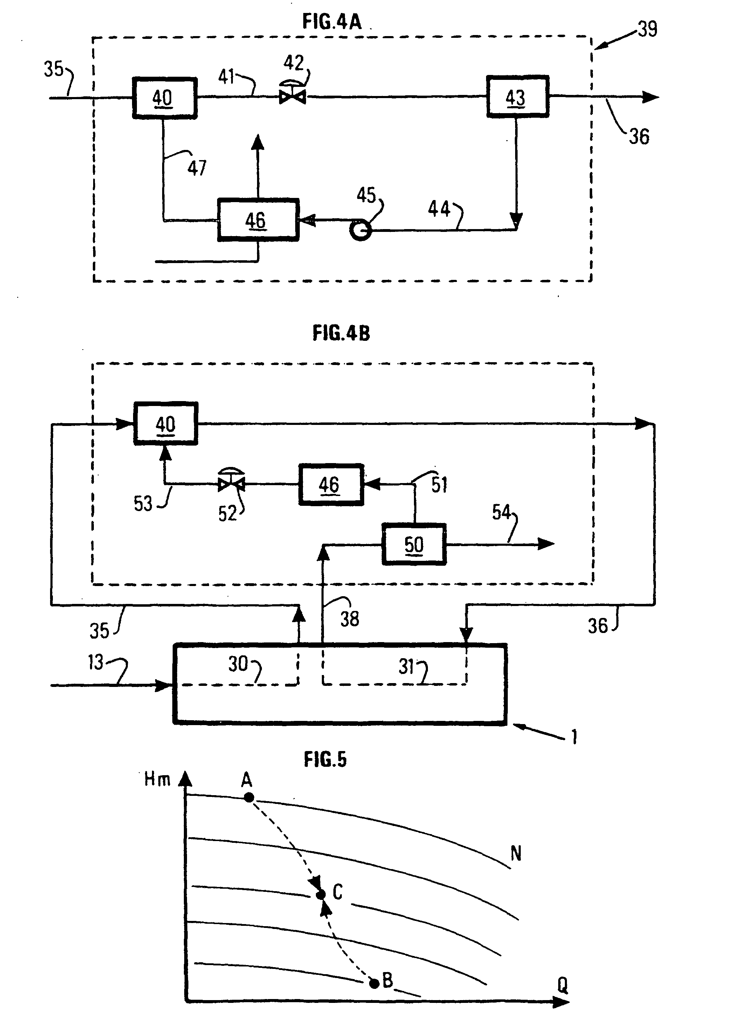

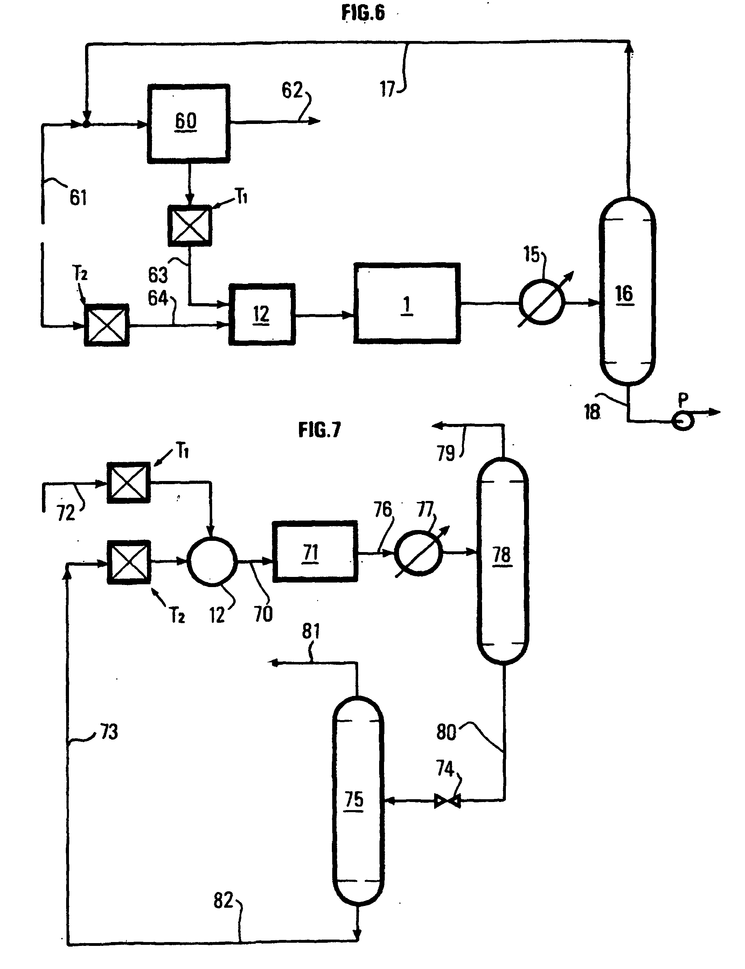

L'invention pourra bien être comprise et tous ses avantages apparaîtront clairement à la lecture de la description d'exemples de réalisation du dispositif selon l'invention qui suivent, illustrés par les figures annexées dans lesquelles :
◇ la figure 1 représente schématiquement le principe de l'invention,
◇ la figure 2 montre un détail des hydrauliques d'un dispositif de compression diphasique de la figure 1,
◇ la figure 3 schématise une variante de réalisation du dispositif de compression diphasique de la figure 1 comportant des hydrauliques disposées dos à dos, associé à une unité de traitement auxiliaire,
◇ les figures 4A et 4B schématisent deux variantes de dispositif de traitement de la figure 3,
◇ La figure 5 représente un schéma possible de régulation du dispositif de compression,
◇ la figure 6 représente l'application du dispositif de la figure 1 après une unité de traitement ,
◇ la figure 7 schématise une variante de réalisation où le solvant est recyclé.

Le mélange et la dissolution de la fraction à séparer selon l'invention est conduite en accord avec des principes physiques que l'on va rappeler ci-après.

Dans les conditions d'équilibre, la dissolution d'un gaz dans un solvant varie avec la pression et la température. Le taux de dissolution exprimé en unités de volume de gaz par unité de volume de liquide dans les conditions normales de pression et de température, s'accroît, dans le cas général, lorsque la pression augmente et lorsque la température diminue, par exemple dans le cas de la dissolution du CO₂ dans l'eau. Toutefois, il existe des cas où la dissolution du gaz tend à augmenter avec la température, par exemple la dissolution de l'H₂S dans l'eau à haute pression et basse température.

La dissolution d'un gaz dans un solvant ne s'effectue pas instantanément mais de manière progressive compte tenu du temps de diffusion entre les phases. L'approche vers une condition d'équilibre peut par conséquent être activée par une augmentation des surfaces de contact entre les phases.

Dans le cas d'une compression diphasique à l'aide par exemple d'une pompe de type rotodynamique, l'approche des conditions d'équilibre est facilitée par la formation de bulles de très petites dimensions à la jonction entre les parties fixes et les parties tournantes de la pompe, lieu où s'exercent de grandes forces de cisaillement. La pompe rotodynamique est par exemple équipée d'impulseurs hélico axiaux ou hélico radio axiaux.

Cette approche vers l'équilibre est toutefois ralentie par la coalescence des bulles pouvant apparaître au niveau des impulseurs et/ou des redresseurs du dispositif de compression diphasique. Pour des performances sensiblement égales, (hauteur manométrique et longueur axiale), on aura avantage à augmenter le nombre des cellules de compression (impulseurs et/ou redresseurs) et à diminuer leur longueur axiale, de manière à accroître le nombre de fois où la taille des bulles peut être réduite.

Lorsque la phase gazeuse du fluide est constituée d'un gaz soluble et d'un gaz non soluble, on tiendra compte de la pression partielle du gaz soluble pour déterminer les conditions de dissolution de cette fraction gazeuse dans le solvant.

La figure 1 représente schématiquement un premier mode de réalisation du dispositif selon l'invention appliqué pour le traitement d'un gaz comportant une phase hydrocarbure et des gaz acides, tels que du dioxyde de carbone CO₂ et/ou de l'hydrogène sulfuré H₂S, afin de les séparer en totalité ou au moins en majorité de la phase hydrocarbure.

Ce mode de mise en oeuvre utilise au moins un dispositif de compression diphasique 1, adapté à homogénéiser les différentes phases gazeuses et liquides, et comprenant au moins un étage de compression E composé d'un impulseur I de type hélico radio axial, suivi d'un redresseur R (figure 2). Les hydrauliques des impulseurs et des redresseurs présentent des caractéristiques spécifiques, par exemple décrites dans l'un des brevets du demandeur FR 2.333.139, FR 2.471.501 ou FR 2.665.224, dont les enseignements techniques sont incorporés par référence. Le dispositif de compression diphasique 1 est adapté pour réaliser la dissolution des gaz acides dans une phase liquide choisie en conséquence et injectée avec le gaz. La figure 2 détaille ci-après un exemple de dispositif de compression utilisé pour mettre en oeuvre l'invention.

Pour des raisons technologiques, le dispositif de compression peut être formé de plusieurs corps de machine de compression ou de pompage, chacun de ces corps étant constitué d'une ou plusieurs sections et chacune des sections comportant un ou plusieurs étages de compression ou de pompage.

Sans sortir du cadre de l'invention le dispositif de compression diphasique pourrait aussi être tout dispositif de compression permettant un mélange efficace de la fraction à séparer et de la phase solvant, par exemple une pompe à vis.

Un premier conduit 2 permet d'amener le gaz à traiter (fluide F et gaz acide représentant la ou les fractions A à séparer). Ce conduit peut être pourvu d'un compresseur 3, suivi d'un moyen de refroidissement tel qu'un échangeur de chaleur 4, des moyens de mesure par exemple un capteur de température 5, un capteur de pression 6 et un débitmètre 7, l'ensemble de ces éléments étant référencé T1.

Un deuxième conduit 8 permet d'introduire la phase solvant S, par exemple de l'eau. Ce conduit est pourvu d'une pompe monophasique 9, d'un capteur de pression 10 et d'un débitmètre 11, référencés ensemble T2.

Le gaz comprimé et refroidi, et la phase solvant issue de la pompe 9, sont introduits par l'intermédiaire d'un dispositif 12 et d'un conduit d'introduction 13 dans le dispositif de compression diphasique 1.

Le gaz est comprimé pour obtenir un débit acceptable par le dispositif de compression diphasique, et la phase solvant est mise à une pression sensiblement identique à celle du gaz comprimé, pour permettre leur introduction dans un même étage du dispositif de compression diphasique, par exemple l'étage d'entrée du dispositif.

Le dispositif de compression diphasique 1 est pourvu d'au moins un conduit d'évacuation 14 du mélange de fluides comprimé composé essentiellement des hydrocarbures débarrassés de la totalité ou au moins de la majorité des gaz acides à séparer ou fluide F2, et d'une solution F1 composée de la phase solvant S et des gaz acides dissous en majorité dans cette phase solvant.

Le mélange de fluides extrait peut être éventuellement refroidi dans un échangeur 15 disposé sur le conduit 14, avant d'être introduit dans un dispositif de séparation 16. En sortie du séparateur, la phase gazeuse composée essentiellement d'hydrocarbures est évacuée en tête par un conduit 17, et la solution composée de la phase solvant et des gaz acides dissous est évacuée par un conduit 18 en fond du séparateur.

Cette phase liquide peut être transférée par une pompe P vers une unité de traitement ou un réservoir de stockage.

Différents moyens de mesure peuvent être disposés en sortie du dispositif de compression diphasique et du séparateur, tels que des capteurs de pression. de température, et de débit ainsi que sur le dispositif lui-même, tels que des mogens de mesure de la vitesse de rotation du dispositif de compression. Ces moyens ne sont pas représentés sur cette figure pour des raisons de simplification.

Les différents moyens de mesure sont par exemple reliés à un micro-contrôleur ayant pour fonction de réguler les débits des différents fluides et/ou de réguler la vitesse de rotation du dispositif de compression diphasique de manière à obtenir un taux de dissolution maximum des gaz acides dans la phase solvant.

On peut ainsi mesurer et réguler la quantité de la phase solvant injectée par exemple en fonction de la teneur en gaz acides et/ou de la phase hydrocarbure contenue dans le gaz.

La nature de la phase liquide solvant est choisie en fonction des caractéristiques des gaz acides présents dans le fluide à traiter, de façon à obtenir l'absorption pratiquement totale de ces gaz tout en évitant celle des hydrocarbures contenus dans le gaz à traiter. Il est ainsi possible de tenir compte de différents paramètres, tels que la fraction molaire et la solubilité de chacun des composants, ainsi que la pression et la température du fluide à traiter.

Le dispositif de séparation 16 peut être de type statique, la séparation entre les hydrocarbures et la solution solvant-gaz acides étant obtenue par un temps de séjour suffisant dans une enceinte disposée horizontalement ou verticalement. L'enceinte peut être pourvue d'internes tels que des plaques ou des garnissages de façon à faciliter la séparation et éviter l'entraînement des gouttelettes de liquide (solvant) dans la phase hydrocarbure gazeuse. Il est possible de manière plus spécifique de disposer un ballon de type dévésiculeur en amont du conduit d'évacuation du gaz.

Ce dispositif peut aussi être de type dynamique, la séparation étant alors facilitée par un effet de centrifugation. Dans ce cas, le dispositif de compression et le dispositif de séparation peuvent être entraînés par un arbre commun.

Le dispositif 12 a pour fonction notamment de réunir les gaz acides et la phase solvant qui se trouvent à un niveau de pression sensiblement identique pour les introduire ensemble dans l'étage d'entrée du dispositif de compression par exemple.

Lorsqu'il existe la possibilité d'une formation d'hydrocarbures liquides en sortie du dispositif de compression diphasique et de l'échangeur de chaleur 15, le dispositif de séparation 16 pourra comporter un conduit d'évacuation 19 d'une phase hydrocarbure liquide qui peut être présente à l'entrée du dispositif de compression ou encore s'être formée sous l'effet de l'augmentation de pression dans le dispositif de compression diphasique et par échange de chaleur dans l'échangeur 15.

Pour des fluides comportant au moins une phase gazeuse et au moins une phase liquide, il est possible de prévoir des moyens de séparation des phases, qui sont disposés en amont des ensembles T1 et T2, et des moyens pour envoyer la phase gazeuse vers le conduit 2, et la phase liquide vers le conduit d'introduction 8 de la phase solvant.

La mise en oeuvre de la méthode est explicitée en relation avec le schéma d'un exemple de dispositif de compression donné à la figure 2, qui comprend quatre étages de compression, disposés en série à l'intérieur d'un carter. La phase solvant utilisée pour capter les gaz acides est par exemple de l'eau.

Chaque étage Ei du système comporte un impulseur hélico radio axial li, solidaire d'un arbre de rotation 21, suivi d'un redresseur Ri, i désignant le rang de l'étage de pompage diphasique.

Le dispositif de compression diphasique comporte au moins une ouverture 23 communiquant avec le conduit d'introduction 13 du mélange de fluides et un étage d'entrée 24 disposé en amont du premier impulseur E1.

Au niveau de sa sortie, le dispositif de compression diphasique peut comporter une pièce adaptatrice, telle qu'une volute 25 disposée après l'impulseur du dernier étage et qui permet de transformer l'énergie cinétique en énergie potentielle pour minimiser les pertes d'énergie en sortie, la volute 25 étant reliée au conduit d'évacuation 14.

En sortie du premier impulseur I1, le mélange de fluides possède un niveau de pression P1. Ce mélange comporte deux phases, l'une se présentant sous la forme d'une solution de gaz acides dans l'eau, et l'autre étant constituée en majorité des hydrocarbures et de la fraction des gaz acides qui n'est pas encore dissoute.

La dissolution des gaz acides dans l'eau et le mélange de ces deux phases s'effectuent comme il a été explicité précédemment, du fait de la compression diphasique et sous l'effet des forces de cisaillement existantes entre les parties mobiles et les parties fixes du dispositif de compression diphasique.

En passant à travers les étages de pompage de rang i supérieur, le mélange M1 continue à acquérir de l'énergie, ceci jusqu'à obtenir un niveau de pression donné Ps, au moins suffisant pour permettre la dissolution des gaz acides dans l'eau et qui peut aussi assurer le transport des hydrocarbures séparés.

Le mélange est extrait par le conduit d'évacuation 14, envoyé dans l'échangeur de chaleur 15 et séparé dans le dispositif de séparation 16, en une phase hydrocarbure gazeuse pratiquement exempte des gaz acides, extraite par le conduit 17, et une solution eau-gaz acides évacuée en fond de séparateur par le conduit 18 (figure 1).

La figure 3 regroupe deux variantes de réalisation du dispositif de l'invention qui peuvent être utilisées séparément ou conjointement, représentant respectivement un montage particulier d'hydrauliques dit « dos à dos », avantageux pour des applications mettant en oeuvre des pressions élevées, et l'utilisation en série d'un dispositif de traitement.

Le dispositif de compression diphasique est composé de deux sections 30, 31 pour lesquelles les étages de compression sont montés «dos à dos », les deux sections étant séparées par un dispositif d'étanchéité 32, par exemple, une étanchéité à labyrinthes. Le mélange circule dans la section 30 dans un sens opposé à celui de la section 31.

Selon cette variante de réalisation, la section 30 comporte plusieurs étages de compression Ei (li, Ri) suivis d'une volute 34. Le mélange de fluides composé du gaz comportant les gaz acides et de l'eau est envoyé dans la première section 30 où il est porté à un niveau de pression intermédiaire Pi et où les gaz acides se dissolvent au moins partiellement dans l'eau. Le nouveau mélange de fluides ainsi obtenu Mi est évacué par un conduit 35 situé en aval de la volute 34.

Entre deux sections, il est possible de disposer différents dispositifs connus de l'homme du métier, par exemple :
- de mélange, tel qu'un segment de garnissage structuré, ayant une fonction de mélangeur statique,
- de refroidissement, par échange thermique,
- de séparation, en utilisant un séparateur statique ou dynamique.

Dans l'exemple donné sur cette figure à titre illustratif et nullement limitatif, le mélange Mi passe au travers d'un dispositif de traitement 39 avant d'être envoyé vers la seconde section du dispositif de compression par un conduit 36. Des exemples de dispositif de traitement sont détaillés aux figurés 4A et 4B.

Ce mélange Mi est comprimé au travers des étages de compression de la deuxième section 31 avant d'être évacué par la volute 37 et le conduit 38 correspondant à la sortie haute pression du dispositif de compression. En passant dans la deuxième section du dispositif de compression, le mélange Mi voit son niveau de pression s'élever jusqu'à une pression Ps suffisante pour obtenir la dissolution pratiquement totale des gaz acides dans l'eau.

Le mélange de fluide formé par la solution eau-gaz acides dissous, et la phase gazeuse hydrocarbure appauvrie en gaz acides, est extrait par le conduit 38 avant d'être refroidi éventuellement et séparé selon un schéma identique à celui de la figure 1 après passage dans un échangeur de chaleur semblable à 15 et un séparateur 16 (figure 1).

Le montage "dos à dos" d'un tel agencement présente notamment comme avantage de minimiser les efforts de poussée axiale, dans le cas des applications à haute pression.

Le dispositif de traitement 39 disposé en série permet de réaliser différents types d'opération dont certaines sont décrites ci-dessous à titre illustratif et nullement limitatif, en relation avec les figures 4A et 4B.

Le mélange Mi issu de la sortie moyenne pression ou pression intermédiaire, est envoyé par un conduit 35 vers l'unité de traitement 39. En aval de l'unité de traitement 39, le mélange Mi est ensuite envoyé par le conduit 36 vers l'entrée moyenne pression de la deuxième section 31 du dispositif de compression.

Par le simple fait de l'écoulement du mélange diphasique et du temps de résidence dans les conduits 35, 36 ainsi que dans l'unité de traitement 39, il est possible de s'approcher des conditions de dissolution définies en condition d'équilibre. En conséquence, les diamètres et les longueurs des tuyauteries situées de part et d'autre de l'unité de traitement 39 pourront être calculées de façon à ajuster ce temps de résidence.

Les temps de résidence à observer seront éventuellement définis à partir d'essais préliminaires réalisés dans des conditions de fonctionnement réel. Il sera ainsi possible de prédire les écarts de dissolution entre les conditions transitoires et à l'équilibre, ces écarts pouvant être exprimés en durée temporelle ou en débit de gaz.

L'unité de traitement 39 pourra comprendre un système de réfrigération non représenté pour des raisons de clarté de figure et pouvant être intégré dans l'unité. L'échange de chaleur permettra de favoriser la dissolution du gaz dans le liquide et par conséquent :
- elle permettra de s'approcher des conditions d'équilibre, compte tenu du temps de résidence dans le système de réfrigération,
- elle permettra une augmentation de la densité du mélange, paramètre favorable à la compression d'un mélange diphasique,
- elle permettra une réduction du rapport des débits volumiques de gaz et de liquide, paramètre également favorable à la compression d'un mélange diphasique.
L'échange de chaleur pourra être un refroidissement ou un réchauffement. Par exemple, pour améliorer la dissolution du CO₂, on réalisera un refroidissement.

Pour la dissolution de l'H₂S, à haute pression, un refroidissement est favorable pour sa dissolution dans l'eau à température élevée alors qu'un réchauffement est favorable à basse température.

L'unité de traitement 39 pourra être conçue de façon à refroidir le mélange diphasique et/ou une partie de la phase liquide prélevée à partir de ce mélange. Les figures 4A et 4B schématisent deux exemples de réalisation du dispositif de traitement comportant des moyens de prélèvement et de recyclage du liquide.

Sur la figure 4A, l'unité de traitement 39 comporte un mélangeur de type statique ou dynamique 40 disposé sur le conduit 41, une vanne de réglage des pertes de charge 42, un moyen 43 d'extraction d'au moins une partie de la phase liquide contenue dans le mélange diphasique circulant dans le conduit 41, un conduit 44 et une pompe 45 permettant d'envoyer la fraction liquide extraite, vers un dispositif de refroidissement tel qu'un échangeur 46 en sortie duquel la fraction liquide refroidie est recyclée par un conduit 47 au mélangeur statique 40 pour être mélangé avec le fluide circulant dans le conduit 41.

Lorsque le fluide se présente sous la forme d'un écoulement stratifié dans le conduit 41, les moyens d'extraction 43 sont choisis pour réaliser le prélèvement d'au moins une partie de la phase liquide en un point bas de la conduite.

Pour des fluides en écoulement annulaire les moyens d'extraction 43 permettront d'extraire une fraction de la phase liquide à la périphérie de la conduite 41.

La pompe 45 peut être une pompe monophasique de faible hauteur manométrique.

La figure 4B schématise une autre variante de réalisation où le prélèvement de la totalité ou d'une partie du fluide à refroidir est réalisé à haute pression en sortie du dispositif de compression diphasique.

L'unité de traitement comporte le mélangeur statique ou dynamique 40 disposé sur le conduit 41, des moyens d'extraction 50 d'une fraction du fluide issu du dispositif de compression et qui sont reliés à l'échangeur de chaleur 46 par un conduit 51, une vanne 52 permettant le réglage du débit de liquide refroidi dans l'échangeur de chaleur 46, le liquide refroidi étant envoyé par un conduit 53 vers le mélangeur statique 40.

La partie du fluide non prélevée et correspondant sensiblement au débit du fluide circulant dans le conduit 13 est évacuée par un conduit 54.

La recirculation du liquide refroidi vers le mélangeur 40 est permise en fonctionnement normal sans l'aide d'une pompe supplémentaire du fait de la différence de pression positive entre le conduit 38 et le conduit 35 .

De tels agencements (figures 4A et 4B) permettront notamment :
- une plus grande efficacité et une réduction en volume de l'échangeur opérant à une pression élevée ou moyennement élevée,
- un accroissement du débit de liquide dans la zone de recyclage favorable à la dissolution du gaz dans le liquide.

L'unité de traitement 39 pourra être équipée d'autres conduits 39b (figure 3) permettant l'ajout d'un fluide au mélange Mi, par exemple des additifs cités précédemment.

Sur la figure 5, on a schématisé dans un diagramme hauteur manométrique (en ordonnée) - volume de sortie (en abscisse) - paramétré en vitesse (N), les performances hydrauliques du dispositif de compression diphasique. Sur ce diagramme ont été représentés un point de fonctionnement souhaité C, ainsi que deux points, A et B, représentant deux cas de dysfonctionnement.

En équipant le dispositif de compression diphasique d'un système de mesures approprié comprenant par exemple des capteurs de pression, de température, de débit, de densité (ou taux de vide), et un dispositif de contrôle et de calcul tel qu'un micro-contrôleur relié à tous ces éléments, il est possible :
- de mesurer différents paramètres :
   * les valeurs de débit de la phase gazeuse et de la phase liquide avant leur entrée dans le dispositif de compression diphasique Qg et Ql, pour chacun de mesurer les valeurs de la température et de pression associées Tg et Tl, Pg et PI,
   * en sortie du dispositif de compression des valeurs liées au mélange de fluides telles que sa pression Pm, sa température Tm, son débit Qm et sa densité ρm,
- de mémoriser les paramètres caractéristiques des fluides gazeux et liquides en entrée du dispositif de compression par exemple la densité pour le fluide liquide, ρl, et la masse molaire Mg et le facteur isentropique yg pour le fluide gazeux,
- à partir de ces différentes mesures, des données précédemment mentionnées et d'un traitement des données approprié, de déterminer le point de fonctionnement du dispositif de compression et la courbe de vitesse correspondante, et
- en comparaison avec une valeur déterminée de vérifier que ce point de fonctionnement appartient à un domaine permis de fonctionnement ou un domaine optimal de fonctionnement.

Dans le cas où le point de fonctionnement se trouve en dehors du domaine de fonctionnement souhaité, il sera possible d'agir sur la vitesse de rotation si le dispositif possède un entraînement à vitesse variable, et éventuellement sur l'efficacité du système de réfrigération ou encore sur le débit de liquide recyclé selon la conception du dispositif de compression.

Par exemple, si le point A traduit une dissolution trop rapide avec un débit en aval trop faible et une pression en aval trop importante, pour remédier à ce problème il sera possible d'agir en réduisant la vitesse de rotation du dispositif de compression diphasique pour amener le point de fonctionnement A vers le point de fonctionnement souhaité C.

Le point de fonctionnement B schématise le cas inverse.

Le dispositif de compression sera de préférence équipé d'un entraînement à vitesse variable. La régulation en vitesse pourra s'effectuer automatiquement ou manuellement.

La figure 6 schématise un exemple d'application du dispositif de compression diphasique décrit précédemment disposé en aval d'une unité de traitement 60 telle que décrite dans les brevets du demandeur FR 2.605.241 et FR 2.616.087 et dont l'enseignement technique est incorporé par référence. En sortie de ces unités de traitement par solvant physique ou solvant chimique, les gaz acides possèdent une pression variant généralement entre 0,5 et 1,5 MPa et une température comprise entre -30°C et -10°C.

Certaines références déjà mentionnées sur les figures précédentes désignent des éléments ou dispositifs précédemment introduits.

L'unité de traitement 60 est pourvue d'un conduit 61 permettant d'introduire le gaz à traiter fortement chargé en gaz acides, d'un conduit 62 d'évacuation du gaz traité ne comportant des gaz acides qu'en très faible quantité, et d'un conduit 63 d'extraction d'un fluide comportant des gaz acides en concentration élevée utilisé lors du traitement et des hydrocarbures en concentration plus faible coabsorbés par le solvant.

Le conduit d'extraction 63 peut être relié au dispositif de compression diphasique 1 selon un schéma sensiblement identique à celui de la figure 1.

L'eau utilisée comme solvant est introduite dans le dispositif 1 par un conduit 64 après passage par exemple dans l'ensemble T2 (figure 1).

A l'intérieur du dispositif de compression diphasique les gaz acides se dissolvent dans l'eau. Le fluide formé des hydrocarbures et de la solution gaz acides dissous dans l'eau est séparé selon un schéma identique à celui décrit à la figure 1, pour donner des hydrocarbures évacués par le conduit 17 et recyclés vers le conduit d'introduction 61.

Une telle façon de procéder permet avantageusement d'optimiser le taux de récupération des hydrocarbures.

La figure 7 schématise une variante de réalisation où l'on recycle la phase solvant, qui se révèle avantageuse lorsque les solvants utilisés sont polluants et/ou coûteux.

En aval du dispositif décrit à la figure 1, on dispose d'un ensemble comportant :
- un dispositif de compression 71 présentant des caractéristiques sensiblement identiques à celles du dispositif de compression diphasique 1 de la figure 1,
- un conduit 72 d'introduction d'un fluide à traiter dans le dispositif de compression diphasique 71, et un conduit 73 pour amener une phase solvant régénérée, par exemple un solvant physique capable de capter les gaz acides contenus dans le fluide à traiter. La phase solvant régénérée provient d'un circuit de régénération comprenant une vanne de détente 74 et un ballon séparateur 75. Le fluide et la phase solvant sont mélangées par le dispositif 12, le mélange étant introduit par un conduit 70 dans le dispositif de compression diphasique,
- un conduit 76 d'évacuation d'un fluide composé de la fraction non soluble des gaz et d'une solution constituée de la phase solvant dans laquelle les gaz acides ont été dissous selon un principe similaire à celui décrit en relation avec la figure 2 et d'une fraction d'hydrocarbures qui a été coabsorbée,
- un échangeur de chaleur 77,
- un dispositif de séparation 78 en sortie duquel une phase gazeuse composée en majorité d'hydrocarbures est évacuée en tête par un conduit 79, alors que le mélange de fluide formé par la phase solvant, les gaz acides dissous et les hydrocarbures en faible quantité, est évacué en fond de séparateur par un conduit 80 ,
- le circuit de régénération de la phase solvant, comportant, comme il a été mentionné précédemment, la vanne 74 et le séparateur 75. En fond de séparateur 75, la phase solvant régénérée est extraite par un conduit 82 et recyclée par le conduit 73 à l'entrée du dispositif de compression diphasique 71. En tête, une phase gazeuse riche en gaz acides est évacuée par un conduit 81.

Cette phase gazeuse peut être envoyée pour être traitée selon un schéma identique à celui donné à la figure 2, ou encore vers une autre unité de traitement.

Sans sortir du cadre de l'invention, les schémas décrits aux figures 1 et 2 s'appliquent pour comprimer et traiter un gaz naturel avant de l'envoyer dans une conduite d'expédition.

Lorsque le débit volumique du gaz est élevé, le gaz peut être comprimé par le compresseur 3 (figure 1). A l'intérieur du dispositif de compression diphasique 1, il est mis en contact avec une phase aqueuse. En sortie, on a une phase gazeuse constituée par le gaz naturel au moins en partie débarrassé des gaz acides et possédant un niveau de pression égale à la pression d'expédition et une phase aqueuse contenant les gaz acides éliminés et dissous.

Le gaz naturel est envoyé vers le conduit d'expédition alors que la phase aqueuse comportant les gaz acides est pompée pour, par exemple, être réinjectée dans une nappe aquifère ou un réservoir de stockage.

L'invention trouve son application dans le traitement et la compression d'un gaz naturel, d'un gaz de raffinerie, ou encore d'un gaz de synthèse.

La fraction A à séparer des fluides peut être constituée par des gaz acides tels que H₂S ou CO₂, quelque soit le gaz considéré.

La phase solvant peut être une phase aqueuse salée et constituée par de l'eau de formation, additionnée d'un solvant chimique tel qu'une amine.

Il est aussi possible d'utiliser un solvant physique tel qu'un alcool ou un éther.

Le fluide à traiter peut être également un gaz riche en hydrogène ou en azote, la fraction A à séparer étant une fraction hydrocarbure, et le solvant étant constitué par une fraction hydrocarbure liquide telle que par exemple une coupe pétrolière de type essence.

La nature de la phase solvant sera choisie en fonction de la fraction A à séparer et/ou en fonction de celle du gaz traité.

## Revendications

1. Dispositif de traitement d'un fluide F comportant au moins une fraction A à séparer, ladite fraction à séparer étant au moins soluble dans une phase solvant **caractérisé en ce qu'**il comporte :
⇒ au moins un conduit (2) d'introduction du fluide F à traiter,
⇒ au moins un conduit (8) d'arrivée de ladite phase solvant,
⇒ au moins un dispositif (1) de compression diphasique adapté à homogénéiser les différentes phases du fluide et la phase solvant et pour réaliser la dissolution de la majorité de la fraction A dans ladite phase solvant et produire un mélange constitué d'une solution F1 constituée de la phase solvant S et de la fraction A dissoute dans ladite phase solvant, et d'un fluide F2 appauvri au moins de la majorité de la fraction A, le dispositif de compression diphasique comportant une pompe rotodynamique comprenant au moins un impulseur et au moins un redresseur,
⇒ au moins un conduit d'évacuation (14) dudit mélange,
⇒ un dispositif de séparation (16) pourvu de conduits d'évacuation (17, 18) respectivement de la solution F1 constituée de la phase solvant et de la fraction A dissoute et du fluide F2.

2. Dispositif selon la revendication 1, **caractérisé en ce que** le ou les conduits d'introduction (2, 8) sont pourvus de moyens de compression et/ou de pompage et le conduit d'évacuation d'un dispositif de refroidissement.

3. Dispositif selon la revendication 1, **caractérisé en ce qu'**il comporte des moyens (12) disposés en amont dudit dispositif de compression diphasique, lesdits moyens ayant pour fonction de « mélanger » le fluide à traiter et la phase solvant avant de l'introduire par un conduit (13).

4. Dispositif selon l'une des revendications 1 à 3, **caractérisé en ce que** ledit dispositif de compression comporte au moins deux sections (30, 31), une première section (30), comportant au moins un impulseur et au moins un redresseur, permettant d'obtenir un mélange Mi ayant un niveau de pression Pi et une seconde section (31), comportant au moins un impulseur et au moins un redresseur, permettant d'obtenir à partir du mélange Mi un mélange Ms ayant un niveau de pression Ps, un conduit (35) d'évacuation du mélange Mi et un conduit (36) d'introduction d'un fluide Mi dans la seconde partie, lesdites deux sections (30, 31) étant séparées par un dispositif d'étanchéité (32) et les impulseurs et redresseurs des deux sections (30, 31) étant montés « dos à dos ».

5. Dispositif selon l'une des revendications précédentes, **caractérisé en ce qu'**il comporte une unité (39) de traitement et/ou de mélange des fluides, ladite unité (39) de traitement et/ou de mélange étant reliée au dispositif de compression (1) par des conduits d'arrivée et d'évacuation des fluides ( 35 ; 36).

6. Dispositif selon la revendication 5, **caractérisé en ce qu'**il comporte un dispositif d'échange de chaleur (46) dans l'unité de traitement (39).

7. Dispositif selon la revendication 6, **caractérisé en ce qu'**il comporte un circuit (40, 42, 43, 44, 45, 46, 47; 40, 41, 46, 50, 51, 52, 53) d'échange de chaleur, de séparation et de recyclage, d'au moins une partie du mélange diphasique prélevé à partir du dispositif de compression diphasique (1).

8. Dispositif selon l'une des revendications précédentes, **caractérisé en ce qu'**il comporte des moyens de détermination de paramètres liés au fluide et/ou au fonctionnement du dispositif de compression, des moyens de calcul et de traitement de données capables de modifier la vitesse de rotation du dispositif de compression diphasique et/ou d'agir sur l'efficacité du moyen de réfrigération et/ou sur le débit du fluide recyclé dans le circuit de refroidissement.

9. Méthode pour séparer au moins une fraction ou un constituant A d'un fluide F en utilisant une phase solvant sélective vis à vis desdites fractions à séparer, **caractérisée en ce que** l'on envoie ledit fluide F et ladite phase solvant S dans un dispositif de compression diphasique dans des conditions permettant de réaliser la dissolution des fractions A à séparer dans la phase solvant S et obtenir un mélange de fluides formé d'une solution F1 composée des fractions A à séparer dissoutes dans le solvant et d'un fluide F2 débarrassé au moins de la majorité de la fraction A, le dispositif de compression diphasique comportant une pompe rotodynamique comprenant au moins un impulseur et au moins un redresseur.

10. Méthode selon la revendication 9 **caractérisée en ce que** l'on sépare ladite solution F1 de phase solvant et de fraction A dissoute, du reste du fluide F2 débarrassé au moins de la majorité de la fraction A, et on recycle ledit fluide F2 au moins en partie en amont du dispositif de compression diphasique.

11. Méthode selon l'une des revendications 9 à 10, **caractérisée en ce qu'**elle comporte au moins une étape de prélèvement d'au moins une partie du mélange des fluides après compression à travers un nombre d'étages m du dispositif de compression diphasique, une étape de traitement de la partie prélevée et une étape de renvoi après traitement vers un étage du dispositif de compression de rang supérieur au rang de l'étage m de prélèvement.

12. Méthode selon la revendication 11 **caractérisée en ce que** l'on traite le fluide et/ou un fluide tel qu'une partie du mélange diphasique prélevé et/ou une partie de la phase liquide extraite du mélange diphasique prélevé ou au moins une partie du liquide issu du dispositif de compression diphasique et on recycle le fluide traité vers le fluide extrait du dispositif de compression diphasique.

13. Méthode selon l'une des revendications 9 à 12 **caractérisée en ce que** l'on contrôle le débit de la quantité de la phase solvant S en fonction de ladite fraction A à séparer.

14. Méthode selon l'une des revendications 9 à 12 **caractérisée en ce que** l'on régénère la phase solvant et on la recycle à l'entrée du dispositif de compression diphasique.

15. Méthode selon l'une des revendications 9 à 14 **caractérisée en ce que** l'on utilise comme phase solvant liquide une phase aqueuse.

16. Méthode selon l'une des revendications 9 à 14, **caractérisée en ce que** l'on régule la vitesse de rotation du dispositif de compression et/ou l'on contrôle l'efficacité de l'étape de traitement.

17. Utilisation du dispositif et de la méthode selon l'une des revendications précédentes pour le traitement de fluide comportant une phase solvant physique, des gaz acides et une fraction minoritaire d'hydrocarbures dans le but de récupérer la fraction minoritaire d'hydrocarbures.

## Claims

1. A device for processing a fluid F comprising at least one fraction A to be separated, said fraction to be separated being at least soluble in a solvent phase, **characterized in that** it comprises :
- at least one delivery line (2) for the fluid F to be processed,
- at least one delivery line (8) for said solvent phase,
- at least one two-phase compression device (1) permitting the different phases of said fluid and said solvent phase homogeneisation suited to dissolve most of fraction A in said solvent phase and to produce a mixture made up of a solution F1 consisting of solvent phase S and of fraction A dissolved in said solvent phase, and of a fluid F2 depleted in at least most of fraction A, the two-phase compression device comprising a rotodynamic pump comprising at least one impeller and at least one diffuser,
- at least one line (14) for discharging said mixture,
- a separation device (16) provided with lines (17, 18) for discharging respectively solution F1 consisting of the solvent phase and of dissolved fraction A, and fluid F2.

2. A device as claimed in claim 1, **characterized in that** delivery line(s) (2, 8) are provided with compression and/or pumping means, and the discharge line is provided with a cooling device.

3. A device as claimed in claim 1, **characterized in that** it comprises means (12) placed upstream from said two-phase compression device, the purpose of said means being to "mix" the fluid to be processed and the solvent phase prior to introducing it through a line (13).

4. A device as claimed in any one of claims 1 to 3, **characterized in that** said compression device comprises at least two sections (30, 31), a first section (30), comprising at least one impeller and at least one diffuser, allowing to obtain a mixture Mi with a pressure level Pi and a second section (31), comprising at least one impeller and at least one diffuser, allowing to obtain, from mixture Mi, a mixture Ms with a pressure level Ps, a line (35) for discharging mixture Mi and a line (36) for feeding a fluid Mi into the second part, said sections (30, 31) being separated by a sealing device (32) and the impellers and the diffusers of sections (30, 31) being mounted "back to back".

5. A device as claimed in any one of the previous claims, **characterized in that** it comprises a fluid processing and/or mixing unit (39), said processing and/or mixing unit (39) being connected to compression device (1) by fluid delivery and discharge lines (35; 36).

6. A device as claimed in claim 1, **characterized in that** it comprises a heat-exchanger (46) in processing unit (39).

7. A device as claimed in claim 6, **characterized in that** it comprises a circuit (40, 42, 43, 44, 45, 46, 47; 40, 41, 46, 50, 51, 52, 53) for heat exchange, separation and recycling of at least part of the two-phase mixture withdrawn from two-phase compression device (1).

8. A device as claimed in any one of the previous claims, **characterized in that** it comprises means for determining parameters linked with the fluid and/or operation of the compression device, data computing and processing means capable of changing the rotating speed of the two-phase compression device and/or of acting on the efficiency of the refrigeration means and/or on the flow rate of the fluid recycled to the cooling circuit.

9. A method for separating at least one fraction or constituent A from a fluid F by using a solvent phase selective towards said fractions to be separated, **characterized in that** said fluid F and said solvent phase S are fed into a two-phase compression device under conditions allowing to dissolve fractions A to be separated in solvent phase S and to obtain a mixture of fluids made up of a solution F1 consisting of fractions A to be separated dissolved in the solvent and of a fluid F2 freed from at least most of fraction A, the two-phase compression device comprising a rotodynamic pump comprising at least one impeller and at least one diffuser.

10. A method as claimed in claim 9, **characterized in that** said solution F1 consisting of the solvent phase and of the dissolved fraction A is separated from the rest of fluid F2 freed from at least most of fraction A, and said fluid F2 is recycled at least partly upstream from the two-phase compression device.

11. A method as claimed in any one of claims 9 to 10, **characterized in that** it comprises at least one stage of withdrawal of at least part of the mixture of fluids after compression through a number of stages m of the two-phase compression device, a stage of processing the part withdrawn and a stage of sending this part back, after processing, to a stage of the compression device of a higher rank than the rank of the withdrawal stage m.

12. A method as claimed in claim 11, **characterized in that** the treated fluid and/or a fluid such as part of the two-phase mixture withdrawn and/or part of the liquid phase extracted from the two-phase mixture withdrawn or at least part of the liquid coming from the two-phase. compression device is refrigerated and the treated fluid is recycled to the fluid extracted from the two-phase compression device.

13. A method as claimed in any one of claims 9 to 12, **characterized in that** the flow rate of the amount of solvent phase S is controlled as a function of said fraction A to be separated.

14. A method as claimed in any one of claims 9 to 12, **characterized in that** the solvent phase is regenerated and recycled to the inlet of the two-phase compression device.

15. A method as claimed in any one of claims 9 to 14, **characterized in that** an aquesous phase is used as the liquid solvent phase.

16. A method as claimed in any one of claims 9 to 14, **characterized in that** the rotating speed of the compression device is controlled and/or the efficiency of the refrigeration stage is controlled.

17. Use of the device and of the method as claimed in any one of the previous claims for processing a fluid comprising a physical solvent phase, acid gases and a minor fraction of hydrocarbons in order to recover the minor fraction of hydrocarbons.

## Patentansprüche

1. Vorrichtung zum Behandeln eines Fluids F, welches wenigstens eine zu trennende Fraktion A umfasst, wobei diese zu trennende Fraktion löslich in wenigstens einer Lösungsmittelphase ist, **dadurch gekennzeichnet, dass** sie umfasst:
a. wenigstens eine Lieferleitung (2) für das zu verarbeitende Fluid F,
b. wenigstens eine Lieferleitung (8) für diese Lösungsmittelphase,
c. wenigstens eine Zweiphasen-Kompressionseinrichtung (1), die es ermöglicht, die unterschiedlichen Phasen dieses Fluids und diese Lösungsmittelphase zu homogenisieren, die geeignet ist, den größten Teil dieser Fraktion A in dieser Lösungsmittelphase zu lösen und ein Gemisch zu erzeugen, die aus einer Lösung F1 aufgebaut ist, die aus einer Lösungsmittelphase S und der in dieser Lösungsmittelphase gelösten Fraktion A und aus einem Fluid F2 besteht das an wenigstens dem größten Teil der Fraktion A verarmt ist, wobei die Zweiphasen-Kompressionseinrichtung eine rotodynamische Pumpe umfasst, die wenigstens einen Impeller und wenigstens einen Diffusor aufweist,
d. wenigstens eine Leitung (14) zum Austrag dieses Gemisches und
e. eine Trenneinrichtung (16), die mit Leitungen (17, 18) versehen ist, um jeweils die Lösung F1, die aus der Lösungsmittelphase und der gelösten Fraktion A besteht, sowie das Fluid F2 auszutragen.

2. Vorrichtung nach Anspruch 1, **dadurch gekennzeichnet, dass** die Lieferleitung(en) (2, 8) mit Kompressions- und/oder Pumpmitteln versehen sind und die Austragsleitung mit einer Kühleinrichtung versehen ist.

3. Vorrichtung nach Anspruch 1, **dadurch gekennzeichnet, dass** sie Mittel (12) umfasst, die anströmseitig zu dieser Zweiphasen-Kompressionsvorrichtung angeordnet sind, wobei der Zweck dieser Mittel darin besteht, das zu verarbeitende Fluid sowie die Lösungsmittelphase, bevor sie durch eine Leitung (13) eingeführt werden, "zu mischen".

4. Vorrichtung nach einem der Ansprüche 1 bis 3, **dadurch gekennzeichnet, dass** diese Kompressionseinrichtung wenigstens zwei Abschnitte (30, 31) umfasst, einen ersten Abschnitt, der wenigstens einen Impeller bzw. ein Laufrad und einen Diffusor aufweist, die es ermöglichen, ein Gemisch Mi von einem Druckniveau Pi zu erhalten und einen zweiten Abschnitt (31), der wenigstens einen Impeller und wenigstens einen Diffusor umfasst, die es erlauben, aus dem Gemisch Mi ein Gemisch Ms mit einem Druckniveau Ps zu erhalten, eine Leitung (35) zum Austragen des Gemisches Mi und einer Leitung (36) zum Zuführen eines Fluids Mi in den zweiten Teil, wobei diese Abschnitte (30, 31 ) durch eine Dichtungseinrichtung (32) getrennt sind und die Impeller und die Diffusoren der Abschnitte (30, 31 ) "Rücken gegen Rücken" installiert sind.

5. Vorrichtung nach einem der vorhergehenden Ansprüche, **dadurch gekennzeichnet, dass** sie eine Fluidverarbeitungs- und/oder Mischeinheit (39) umfasst, wobei diese Verarbeitungs- und/oder Mischeinheit (39) mit der Kompressionseinrichtung (1) über Fluidliefer- und -austragsleitungen (35, 36) verbunden ist.

6. Vorrichtung nach Anspruch 1, **dadurch gekennzeichnet, dass** sie einen Wärmeaustauscher (46) in der Verarbeitungseinheit (39) umfasst.

7. Vorrichtung nach Anspruch 6, **dadurch gekennzeichnet, dass** sie einen Kreis (40, 42, 43, 44, 45, 46, 47; 40, 41, 46, 50, 51, 52, 53) für Wärmeaustausch, Trennung und Rezyklieren wenigstens eines Teils der Zweiphasenmischung umfasst, die von der Zweiphasen-Kompressionsvorrichtung (1) abgezogen wurde.

8. Vorrichtung nach einem der vorhergehenden Ansprüche, **dadurch gekennzeichnet, dass** sie Mittel zur Bestimmung von Parametern umfasst, die mit dem Fluid und/oder dem Betrieb der Kompressionsvorrichtung, Datenberechnungs- und -verarbeitungsmitteln, die in der Lage sind, die Drehgeschwindigkeit der Zweiphasen-Kompressionsvorrichtung zu verändern und/oder auf den Wirkungsgrad der Kühlmittel und/oder auf die Strömungsrate des zum Kühlkreislauf rezyklierten Fluids einzuwirken, verknüpft sind.

9. Verfahren zum Trennen wenigstens einer Fraktion oder eines Bestandteiles A vom Fluid F unter Verwendung einer Lösungsmittelphase, die selektiv gegenüber den zu trennenden Fraktionen ist, **dadurch gekennzeichnet, dass** dieses Fluid F und diese Lösungsmittelphase S in eine Zweiphasen-Kompressions-vorrichtung unter Bedingungen zugeführt werden, die es ermöglichen, von der Lösungsmittelphase S zu trennende Fraktionen A zu lösen und ein Gemisch von Fluiden zu erhalten, das aus einer Lösung F1, die aus den zu trennenden im Lösungsmittel gelösten Fraktionen A und einem Fluid F2 besteht, das wenigstens vom größten Teil der Fraktion A befreit ist, wobei die Zweiphasen-Kompressionsvorrichtung eine rotodynamische Pumpe umfasst, die wenigstens einen impeller bzw. ein Laufrad und wenigstens einen Diffusor aufweist.

10. Verfahren nach Anspruch 9, **dadurch gekennzeichnet, dass** diese Lösung F1, die aus der Lösungsmittelphase und der gelösten Fraktion A besteht, vom Rest des Fluids F2 getrennt wird, das von wenigstens dem größten Teil der Fraktion A befreit wurde, und dieses Fluid F2 wenigstens zum Teil vor die Zweiphasen-Kompressionsvorrichtung rezykliert wird.

11. Verfahren nach einem der Ansprüche 9 bis 10, **dadurch gekennzeichnet, dass** sie wenigstens eine Stufe zum Abziehen wenigstens eines Teils des Gemisches aus Fluiden nach Kompression durch eine Anzahl von Stufen m der Zweistufen-Kompressionsvorrichtung umfasst, sowie eine Stufe zum Verarbeiten des abgezogenen Teils und eine Stufe, die diesen Teil zurück, nach Verarbeitung, an eine Stufe der Kompressionsvorrichtung höherer Ordnung als der Ordnung der Abzugsstufe m schickt.

12. Verfahren nach Anspruch 11, **dadurch gekennzeichnet, dass** das behandelte Fluid und/oder ein Fluid, beispielsweise ein Teil des abgezogenen Zweiphasengemisches und/oder ein Teil der flüssigen Phase, die aus dem abgezogenen Zweiphasengemisch extrahiert wurde oder wenigstens Teil der Flüssigkeit, die aus der Zweiphasen-Kompressionsvorrichtung kommt, gekühlt wird, und das behandelte Fluid zum Fluid rezykliert wird, welches aus der Zweiphasen-Kompressionsvorrichtung extrahiert wurde.

13. Verfahren nach einem der Ansprüche 9 bis 12, **dadurch gekennzeichnet, dass** die Strömungsrate der Menge an Lösungsmittelphase S als eine Funktion dieser abzutrennenden Fraktion A geregelt wird.

14. Verfahren nach einem der Ansprüche 9 bis 12, **dadurch gekennzeichnet, dass** die Lösungsmittelphase regeneriert und an den Eingang der Zweiphasen-Kompressionsvorrichtung rezykliert wird.

15. Verfahren nach einem der Ansprüche 9 bis 14, **dadurch gekennzeichnet, dass** eine wässrige Phase als flüssige Lösungsmittelsphase verwendet wird.

16. Verfahren nach einem der Ansprüche 9 bis 14, **dadurch gekennzeichnet, dass** die Drehgeschwindigkeit der Kompressionsvorrichtung geregelt wird und/oder der Wirkungsgrad der Kühlstufe geregelt wird.

17. Anwendung der Vorrichtung und des Verfahrens nach einem der vorhergehenden Ansprüche auf das Verarbeiten eines Fluids, das eine physikalische Lösungsmittelphase, saure Gase und eine kleinere Fraktion von Kohlenwasserstoffen umfasst, mit dem Ziel, die reinere Kohlenwasserstofffraktion rückzugewinnen.
